# EUROPÄISCHE PATENTANMELDUNG

(11) **EP 3 376 447 A1**
(43) Veröffentlichungstag der Anmeldung: **19.09.2018**
(21) Anmeldenummer: 18401025.4
(22) Anmeldetag: 09.03.2018
(51) Int. Cl.: G06Q 10/06, G06Q 50/02

(54) **LANDWIRTSCHAFTLICHES DATENVERARBEITUNGSSYSTEM UND VERFAHREN ZUR SPEICHERUNG VON DATEN EINES ARBEITSPROZESSES**

(30) Priorität: 15.03.2017 DE 102017105493
(71) Anmelder: Amazonen-Werke H. Dreyer GmbH & Co. KG, 49205 Hasbergen (DE)
(72) Erfinder: Sia, Tim-Randy, 49179 Ostercappeln (DE); Kühn, Christoph, 49080 Osnabrück (DE); Konermann, Thomas, 49479 Ibbenbüren (DE); Käller, Michael, 49324 Melle (DE)

(57) **Zusammenfassung**

Datenverarbeitungssystem bzw. Terminal (103) zur Steuerung einer landtechnischen Maschine (102), wobei das Terminal mit einem Positionserfassungssystem (107) verbunden und ausgebildet ist, die aktuelle Position einer landtechnischen Maschine (102) in einer Kartenansicht auf einer landwirtschaftlichen Fläche anzuzeigen, wobei das Terminal (103) Daten, wie zumindest Positionsdatendaten sowie vorzugsweise Einstellparameter der landtechnischen Maschine und/oder Applikationskarten und/oder Benutzerdaten in einem Speicher hinterlegt, wobei das Terminal feldarbeitsbezogenen Daten, wie zumindest während der Bearbeitung der landwirtschaftlichen Fläche ermittelte Positionsdaten sowie vorzugsweise Einstellparameter der landtechnischen Maschine und/oder Applikationskarten und/oder Benutzerdaten in einem Speicher derart ablegt, dass die Daten mit der jeweils bearbeiteten landwirtschaftlichen Fläche verknüpft sind, wobei die Auswahl der landwirtschaftlichen Fläche durch eine Dateneingabe in das Terminal (103) erfolgt und wobei die abgelegten Daten anhand der landwirtschaftlichen Fläche aufrufbar sind.

## Beschreibung

Die Erfindung betrifft ein Datenverarbeitungssystem zur Steuerung einer landtechnischen Maschine gemäß dem Oberbegriff des Patentanspruches 1 sowie ein Verfahren zur Speicherung von Daten eines Arbeitsprozesses gemäß dem Oberbegriff des Patentanspruches 5.

Die Dokumentation von Arbeitsprozessen in der Landwirtschaft erhält eine immer größere Bedeutung. Dies ergibt sich zum einen aus dem Erfordernis der Nachvollziehbarkeit von geleisteter Tätigkeit im Bereich von Lohnunternehmen und in Großbetrieben mit mehreren Mitarbeitern. Eine möglichst automatisierte Dokumentation der durch den Auftraggeber angeforderten Arbeiten durch das Lohnunternehmen ermöglicht eine einfache Abrechnung der durchgeführten Tätigkeit. Zudem ist im Bereich von Großbetrieben eine möglichst einfache und zentrale Delegierung der zu leistenden Tätigkeiten auf der Vielzahl der zu einem Großbetrieb gehörenden landwirtschaftlichen Flächen in Form von Arbeitsaufträgen sehr effizient möglich. Zum anderen ergibt sich ebenso aus der zunehmenden gesetzlichen Nachweispflicht jedes Landwirtes insbesondere im Bereich Düngung und Pflanzenschutz ein Erfordernis der Dokumentation. Zudem ermöglicht die zunehmende Zahl von Sensoren an den verschiedenen landtechnischen Geräten eine immer bessere Überwachung des Arbeitsprozesses, so dass sich in der Dokumentation und Auswertung verschiedenster Sensordaten auch ein immer größeres Optimierungspotential des zu erzielenden Ertrages ergibt.

Das Dokumentieren verschiedenster Arbeitsprozesse und das Aufzeichnen der erfassten Sensordaten ist bereits in einer Vielzahl von landwirtschaftlichen Terminals und Datenverarbeitungssystemen realisiert. Da sich die Erfassung der Arbeitsdaten allerdings zunächst im Bereich der Lohnunternehmen und den Großbetrieben etabliert hat, sind bekannte Terminals und Datenerfassungssysteme derart ausgebildet, dass die geleistete Arbeit in Form von Arbeitsaufträgen dokumentiert wird.

Dies hat sich insbesondere in kleineren Betrieben mit einem oder wenigen Mitarbeitern als nachteilig erwiesen, da die Arbeitsweise dieser Landwirte sich eher an den zu bearbeitenden Flächen orientiert. Der Landwirt fährt typischerweise vor dem Beginn seiner Feldarbeit mit der landtechnische Maschine zu der zu bearbeitenden Fläche. Dort angekommen, wird die Maschine in den Arbeitsmodus versetzt, beispielsweise ausgeklappt und abgesenkt. Für die Dokumentation der durchzuführenden Tätigkeit muss nun zunächst bei Terminals wie aus dem Stand der Technik bekannt, ein Arbeitsauftrag angelegt werden und anschließend die zu bearbeitende landwirtschaftliche Fläche ausgewählt werden, was für den Landwirt einen unnötigen Aufwand bedeutet.

Aufgabe der vorliegenden Erfindung ist es demgemäß ein Datenverarbeitungssystem zur Steuerung einer landtechnischen Maschine bereitzustellen, welches eine möglichst einfache Dokumentation der durchzuführenden Tätigkeiten ermöglicht.

Diese Aufgabe wird erfindungsgemäß durch den kennzeichnenden Teil des Anspruchs 1 gelöst. Demnach ist das Datenverarbeitungssystem ausgebildet, zumindest während der Bearbeitung der landwirtschaftlichen Fläche ermittelte Positionsdaten sowie vorzugsweise Einstellparameter der landtechnischen Maschine und/oder Applikationskarten und/oder Benutzerdaten in einem Speicher derart abzulegen, dass die Daten mit der jeweils bearbeiteten landwirtschaftlichen Fläche verknüpft sind, wobei die Auswahl der landwirtschaftlichen Fläche durch eine Dateneingabe in das Terminal erfolgt und wobei die abgelegten Daten anhand der landwirtschaftlichen Fläche aufrufbar sind. Als Datenverarbeitungssysteme im Sinne der Erfindung, sind hier insbesondere Terminals zur Steuerung von landtechnischen Maschinen und Dokumentation von landwirtschaftlichen Arbeitsprozessen und/oder Smartphones bzw. Tablet-Computer, welche zur Steuerung von landtechnischen Maschinen und/oder zur Dokumentation von landwirtschaftlichen Arbeitsprozessen eingerichtet sind, gemeint.

Es werden also alle relevanten Daten derart gespeichert, dass sie mit der bearbeiteten landwirtschaftlichen Fläche verknüpft sind. Zu diesem Zweck ist vorgesehen, dass in dem Terminal die verschiedenen landwirtschaftlichen Flächen, beispielsweise in einer Liste, hinterlegt sind. Der Benutzer wählt einfach die Fläche aus, die er bearbeiten möchte. Alternativ kann die bearbeitete Fläche auch automatisch anhand der aktuellen GPS-Position der landtechnischen Maschine ausgewählt werden. Zudem können diejenigen Daten ausgewählt werden, die für die durchzuführende Bearbeitung gespeichert werden sollen. Zumindest werden jedoch Positionsdaten während der Bearbeitung gespeichert, um die abgefahrenen Fahrspuren und ggf. die bearbeitete Fläche ermitteln zu können. Mit anderen Worten werden also die für den Bearbeitungsvorgang relevanten Daten zu der zu bearbeitenden Fläche gespeichert, so dass jeweils für einen neuen Bearbeitungsvorgang einfach die zu bearbeitende Fläche und die zu speichernden Daten ausgewählt werden. Dies bietet im Vergleich zum Stand der Technik den Vorteil, dass nicht auftragsbasiert gearbeitet werden muss, für jeden neuen Bearbeitungsvorgang also jeweils ein neuer Auftrag angelegt werden muss, sondern dass der Landwirt lediglich die zu bearbeitende Fläche auswählt und vorzugsweise anschließend die zu protokollierenden Daten. Da die Bearbeitungsdaten jeweils in Abhängigkeit der zu bearbeitenden Fläche gespeichert werden, können die Bearbeitungsdaten durch Auswahl der jeweiligen Fläche auch wieder aufgerufen werden. Es ist also nicht notwendig durch eine Vielzahl von Aufträgen zu blättern, wenn ermittelt werden soll, welche Tätigkeiten zuvor auf einer spezifischen landwirtschaftlichen Fläche durchgeführt wurden. Stattdessen können durch eine Auswahl der jeweiligen Fläche die zuvor auf dieser Fläche durchgeführten Bearbeitungsschritte aufgerufen und analysiert werden.

Der Landwirt muss vor dem Beginn der Tätigkeit also nicht mehr wie im Stand der Technik üblich zunächst umständlich einen Auftrag anlegen und anschließend diesem eine zu bearbeitende Fläche und die durchzuführende Tätigkeit zuweisen. Stattdessen wird erfindungsgemäß einfach die zu bearbeitende Fläche ausgewählt, beispielsweise aus einer Liste von Flächen, die zu dem Betrieb des Landwirtes gehören, anschließend erfolgt die Auswahl der durchzuführenden Tätigkeit bzw. der zu speichernden Daten. Bei der Bearbeitung der Fläche werden dann zumindest die Positionsdaten während der Bearbeitung der landwirtschaftlichen Fläche aufgezeichnet. Aus diesen kann beispielsweise die bearbeitete Fläche berechnet werden. Zudem ist vorgesehen, dass der Benutzer zusätzlich zu speichernde Daten auswählen kann. Bei diesen zusätzlichen Daten kann es sich beispielsweise um Einstellparameter der landtechnischen Maschine, wie insbesondere Sollwerte, wie beispielsweise die Arbeitsbreite und Ausbringmenge, und Sensordaten, wie beispielsweise aktuelle Ausbringmenge, Arbeitsbreite usw. handeln. Zudem kann vorgesehen sein, Applikationskarten zu speichern, welche bei der Bearbeitung der landwirtschaftlichen Fläche verwendet werden oder Benutzerdaten insbesondere welcher Benutzer den Bearbeitungsvorgang auf der landwirtschaftlichen Fläche durchgeführt hat. Es ist zudem denkbar weitere Daten zu speichern, die mittels Sensoren durch manuelle Eingabe oder durch Datenübertragung zu dem Terminal gewonnen wurden. Hierbei kann es sich beispielsweise um Wetterdaten, wie Temperatur, Luftfeuchtigkeit usw. handeln. Auch kann vorgesehen sein, Datum und Uhrzeit zu speichern.

Es kann auch alternativ vorgesehen sein, dass laufend ermittelte Sensordaten, wie Positionsdaten, momentane Ausbringmenge usw., sowie Einstellparameter, wie gewünschte Arbeitsbreite, und auch sonstige Daten, wie Temperatur, laufend zwischengespeichert werden und eine endgültige Speicherung und Verknüpfung der zwischengespeicherten und in der Folge ermittelten Daten durch die Auswahl der landwirtschaftlichen Fläche während der Bearbeitung oder im Anschluss daran erfolgt. Der Landwirt kann also mit anderen Worten einfach mit der Arbeit beginnen. Die ermittelten Daten und eingestellten Parameter werden laufend zwischengespeichert und vorzugsweise mit der jeweils ermittelten GPS-Position verknüpft. Entschließt sich der Landwirt die zwischengespeicherten Daten des gerade durchgeführten oder kurz zuvor abgeschlossenen Bearbeitungsvorganges zur weiteren Verwendung zu speichern, so ist vorgesehen, dass er hierfür lediglich die bearbeitete Fläche aus einer Liste von angelegten Flächen auswählt oder diese neu erstellt. Die zwischengespeicherten Daten werden dann mit der ausgewählten Fläche verknüpft und dauerhaft gespeichert. Zusätzlich kann vorgesehen sein, dass der Benutzer aus den zwischengespeicherten Daten diejenigen auswählt, die auch tatsächlich gespeichert werden sollen und/oder dass weitere Daten eingebbar sind, die ebenfalls gespeichert werden, wie beispielsweise Daten den Benutzer oder einen Kunden betreffend.

Insbesondere ist vorgesehen, dass die zu speichernden Daten zwar in Bezug zur jeweils bearbeiteten landwirtschaftlichen Fläche gespeichert werden und anzeigbar sind, die Daten jedoch zudem auftragsbasiert entsprechend der ISO-Norm 11783 als ISO-XML exportierbar sind. Auf diese Weise können die in der Norm festgelegten Vorgaben bezüglich der Aufzeichnung und Dokumentation von landwirtschaftlichen Arbeitsprozessen auf möglichst komfortable Weise eingehalten werden. Der Benutzer wählt also die landwirtschaftliche Fläche, die zu bearbeiten ist, mittels des Terminals aus und in einem Speicher des Terminals oder eines sonstigen Datenverarbeitungssystems werden die zu erfassenden Daten derart gespeichert, dass sie mit der bearbeiteten landwirtschaftlichen Fläche verknüpft sind. Beim Export der gespeicherten Daten können diese derart in ein ISO-XML Format umgewandelt werden, dass der ISO-Norm 11783 entsprochen wird.

In einer vorteilhaften Weiterbildung der Erfindung erfolgt die Dateneingabe durch eine Bedieneingabe des Benutzers in das Datenverarbeitungssystem bzw. Terminal und/oder eine Übermittlung von Positionsdaten des Positionserfassungssystems an das Datenverarbeitungssystem bzw. Terminal. Es ist also vorgesehen, dass entweder der Benutzer manuell die zu bearbeitenden Fläche auswählt und/oder mittels einer Positionserfassung die zu bearbeitende Fläche ausgewählt wird, indem ermittelt wird, welche bereits in dem Terminal angelegte und damit bekannte Fläche der derzeitigen Position am nächsten ist. In einer Kombination aus beiden Alternativen kann auch vorgesehen sein, dass mittels des Positionserfassungssystems ein Vorschlag für eine Auswahl der zu bearbeitenden Fläche anhand der aktuellen Position der landtechnischen Maschine erfolgt und dieser Vorschlag anschließend durch manuelle Benutzereingabe akzeptiert bzw. abgelehnt und stattdessen eine alternative landwirtschaftliche Fläche angelegt bzw. ausgewählt wird. Auf diese Weise erfolgt die Auswahl der zu bearbeitenden Fläche mit möglichst einfachen und komfortablen Mitteln, im Idealfall ohne dass eine manuelle Auswahl der landwirtschaftlichen Fläche durch den Benutzer überhaupt notwendig wird bzw. die vorgeschlagene Auswahl lediglich bestätigt werden muss.

In einer vorteilhaften Weiterbildung der Erfindung wird bei einem Abbruch eines Bearbeitungsvorganges auf einer landwirtschaftlichen Fläche dieses durch das Terminal dokumentiert und kann bei einem nachfolgenden Anfahren derselben Fläche die Dokumentation des zuvor abgebrochenen Bearbeitungsvorgangs durch das Terminal automatisiert fortgesetzt werden. Ein unvollständig durchgeführter Bearbeitungsvorgang kann beispielsweise durch Vergleich der Gesamtfläche mit der in einem zuvor durchgeführten Bearbeitungsvorgang bearbeiteten Fläche ermittelt werden und bei einem erneuten Anfahren dieser Fläche vorgeschlagen werden, diesen Vorgang fortzusetzen. Somit kann die Dokumentation abgebrochener Arbeitsvorgänge möglichst einfach und effizient zu einem späteren Zeitpunkt fortgesetzt werden. Der Abbruch eines Bearbeitungsvorgangs kann beispielsweise anhand der erfassten Positionsdaten auf der zu bearbeitenden Fläche erfolgen. Auch können Maschinenparameter überwacht werden, die einen Abbruch eines nicht abgeschlossenen Bearbeitungsvorganges anzeigen. Das Fortsetzen eines zuvor abgebrochenen Bearbeitungsvorganges kann auch dadurch ermittelt werden, dass dieselbe Fläche mit derselben landtechnischen Maschine innerhalb einer kurzen Zeitspanne von beispielsweise weniger als zwei Wochen erneut bearbeitet wird. Zur Fortführung des zuvor abgebrochenen Dokumentationsvorganges kann vorgesehen sein, dass das Terminal diesen anhand der ermittelten Positionsdaten, welche auf die zu bearbeitende Fläche schließen lassen, sowie ggf. anhand von Sensordaten, welche die angeschlossene landtechnische Maschine identifizieren, aufruft und automatisiert fortsetzt. Auf diese Weise sind keine oder möglichst wenige zusätzliche Benutzereingaben zur Fortführung eines zuvor abgebrochenen Dokumentationsvorganges vorgesehen, beispielsweise lediglich zur Bestätigung, dass ein zuvor abgebrochener Dokumentationsvorgang fortgesetzt werden soll.

In einer vorteilhaften Weiterbildung der Erfindung erkennt das Datenverarbeitungssystem bzw. Terminal die angekoppelte landtechnische Maschine mittels einer Datenverbindung und fragt entsprechend der angekoppelten Maschine Einstellparameter und/oder Sensordaten ab, um diese anzuzeigen und zu dokumentieren. Es ist also vorgesehen, dass das Terminal die angehängte landtechnische Maschine automatisiert erkennt. Dies kann beispielsweise mittels einer genormten ISOBus-Schnittstelle zwischen dem auf einem Schlepper angeordneten Terminal und einem Jobrechner auf der an den Schlepper angekoppelten landtechnischen Maschine erfolgen. Der Jobrechner meldet dem Terminal dann den Typ der angekoppelten Maschine, so dass dieses für die Dokumentation des Bearbeitungsvorganges die verwendete landtechnische Maschine selbständig auswählen kann. Auf diese Weise muss nicht der Benutzer die verwendete landtechnische Maschine manuell auswählen sofern diese Information im Rahmen des Dokumentationsvorganges gespeichert werden soll. Zudem ist vorgesehen, dass Einstellparameter, wie Arbeitsbreite, Ausbringmenge eines auszubringenden Guts, Arbeitstiefe und sonstige Parameter der landtechnischen Maschine durch das Terminal abgefragt und/oder Sensordaten, wie beispielsweise die ermittelte Restmenge in einem Behälter, die derzeitige Arbeitsbreite, die derzeitige Ausbringmenge, die derzeitige Arbeitstiefe, an das Terminal übermittelt, angezeigt und entsprechend der Benutzervorgaben im Rahmen des Dokumentationsvorganges gespeichert werden. Es kann also vorgesehen sein, dass der Benutzer diejenigen Sensordaten und Einstellparameter auswählt, welche bei dem Dokumentationsvorgang mitgespeichert werden sollen.

Es ist zudem ein erfindungsgemäßes Verfahren vorgesehen, welches die folgenden Schritte beinhaltet:
- Eingabe der zu bearbeitenden Fläche in das Terminal oder Datenverarbeitungssystem,
- Eingabe der zu speichernden Daten bezüglich der durchzuführenden Arbeit, wie insbesondere Einstellparameter der landtechnischen Maschine und/oder Kartendaten und/oder Applikationskarten und/oder Benutzerdaten in das Terminal oder Datenverarbeitungssystem,
- Wiederholtes Auslesen von Sensordaten von Sensoren der landtechnischen Maschine während der Durchführung der Arbeit auf der zu bearbeitenden Fläche,
- Erstellung und Speicherung zumindest eines Datenpaketes durch das Terminal oder Datenverarbeitungssystem, wobei sich das Datenpaket auszeichnet durch eine Verknüpfung von Daten betreffend eine Identifizierung der zu bearbeitenden Fläche, die ausgelesenen Sensordaten und vorzugsweise die durchzuführende Arbeit.

Es ist also zunächst vorgesehen, die zu bearbeitende Fläche auszuwählen. Dieser Schritt kann der als erstes durchzuführende Schritt sein, da die Speicherung der aufzuzeichnenden Daten immer der bearbeiteten Fläche zugeordnet werden. Der Schritt der Auswahl der zu bearbeitenden Fläche kann alternativ auch erst im Verlaufe des Arbeitsprozesses oder nach dessen Abschluss erfolgen. Die ermittelten Daten werden in diesem Fall vorzugsweise zwischengespeichert. Eine Verknüpfung der ermittelten und zwischengespeicherten Sensordaten mit der bearbeiteten Fläche erfolgt dann erst nach der Auswahl der zu bearbeitenden Fläche. Eine Auswahl der zu speichernden Daten erfolgt ebenfalls über eine Eingabe. So ist vorgesehen, beispielsweise die gespeicherten Sensordaten selektiv zu speichern oder zu verwerfen, beispielsweise können die zwischengespeicherten Daten eines bestimmten Sensors verworfen werden. Auch können weitere Daten, wie der Name des Benutzers oder ein Kundenname, in dessen Auftrag der Arbeitsprozess durchgeführt wurde, eingegeben werden. Die zwischengespeicherten und eingegeben Daten werden dann zusammen mit Daten, die die landwirtschaftliche Fläche identifizieren, wie eine Ortsangabe oder Koordinate oder insbesondere einen durch den Benutzer vergebenen Namen verknüpft und als Datenpaket gespeichert. Die Daten können in dem Terminal oder einem sonstigen Datenverarbeitungssystem anhand der zugeordneten landwirtschaftlichen Fläche wieder aufgerufen werden.

Die Auswahl der Fläche kann wie bereits erwähnt erfolgen, indem die Fläche manuell mittels einer Benutzereingabe ausgewählt wird. Alternativ oder zusätzlich ist vorgesehen, mittels eines Positionserfassungssystems und der im Speicher hinterlegten Position möglicher zu bearbeitender Flächen diejenige Fläche auszuwählen bzw. dem Benutzer zur Auswahl vorzuschlagen, die der derzeitigen Position am nächsten liegt.

In einem weiteren Schritt ist vorgesehen die zu speichernden Daten dem Benutzer zur Auswahl anzubieten. Der Benutzer kann diejenigen Daten auswählen, die hinsichtlich des durchzuführenden Bearbeitungsvorganges gespeichert werden sollen. Dies können, wie bereits erwähnt beispielsweise Einstellparameter der landtechnischen Maschine oder Sensordaten sein.

Während der Durchführung der Arbeit auf der zu bearbeitenden Fläche ist also ein wiederholtes Auslesen der Sensordaten der eingegebenen Sensoren vorgesehen, sodass die Sensorwerte mit der jeweiligen Positionsreferenz durch das Terminal gespeichert werden. Es werden also die Sensorsignale wiederholt ermittelt und auch der Positionssensor wiederkehrend ausgelesen, so dass in festgelegten Zeitabständen die Sensordaten und der Ort der Ermittlung dieser Sensordaten gespeichert werden. Sind keine zu speichernden Daten ausgewählt oder wird eine Maschine verwendet, die über keine auslesbaren Sensoren verfügt oder ist keine Datenverbindung zwischen Terminal und landtechnischer Maschine aufgebaut, so werden zumindest die Positionssignale eines Positionsempfängers auf dem Schlepper oder der angehängten landtechnischen Maschine ermittelt und so die während der Bearbeitung befahrenen Fahrspuren gespeichert.

Zum Zweck der Dokumentation erfolgt also eine Erstellung und Speicherung zumindest eines Datenpaketes durch das Terminal oder Datenverarbeitungssystem, wobei sich das Datenpaket auszeichnet durch eine Verknüpfung von Daten betreffend eine Identifizierung der zu bearbeitenden Fläche, der durchzuführenden Arbeit und den ausgelesenen Sensordaten. Somit werden alle relevanten und durch den Benutzer ausgewählten Informationen mit Bezug zu der jeweils bearbeiteten landwirtschaftlichen Fläche in einem Speicher hinterlegt.

In einer vorteilhaften Weiterbildung des Verfahrens ist die Eingabe der durchzuführenden Arbeit durch das Auslesen von Daten, insbesondere Sensordaten und/oder Einstellparametern, der landtechnischen Maschine vorgesehen. Auf diese Weise kann besonders einfach die für die Bearbeitung der landwirtschaftlichen Fläche vorgesehene landtechnische Maschine ermittelt werden. Das Terminal erkennt also die angehängte landtechnische Maschine selbständig und kann beispielsweise auch die an der Maschine angeordneten und auslesbaren Sensoren und/oder die einzustellenden Einstellparameter identifizieren und dem Benutzer diese zur Dokumentation während der Feldarbeit vorschlagen.

Es ist zudem vorgesehen, dass während des Arbeitsprozesses wiederholt ermittelte Sensordaten zwischengespeichert werden und durch Eingabe der zu bearbeitenden Fläche während oder nach Abschluss des Arbeitsprozesses die zwischengespeicherten Daten mit der zu bearbeitenden Fläche verknüpft und gespeichert werden.

Weitere Aspekte der vorliegenden Erfindung ergeben sich aus den Figuren und der Beispielsbeschreibung, hierbei zeigen:
- Fig. 1: ein landtechnisches Maschinensystem mit einem erfindungsgemäßen Terminal,
- Fig. 2: eine Darstellung einer ersten Menüansicht eines erfindungsmäßen Terminals,
- Fig. 3: eine Darstellung einer zweiten Menüansicht eines erfindungsmäßen Terminals,
- Fig. 4: eine Darstellung einer dritten Menüansicht eines erfindungsmäßen Terminals,
- Fig. 5: eine Darstellung einer vierten Menüansicht eines erfindungsmäßen Terminals,
- Fig. 6: eine Darstellung einer fünften Menüansicht eines erfindungsmäßen Terminals und
- Fig. 7: eine Darstellung einer sechsten Menüansicht eines erfindungsmäßen Terminals.

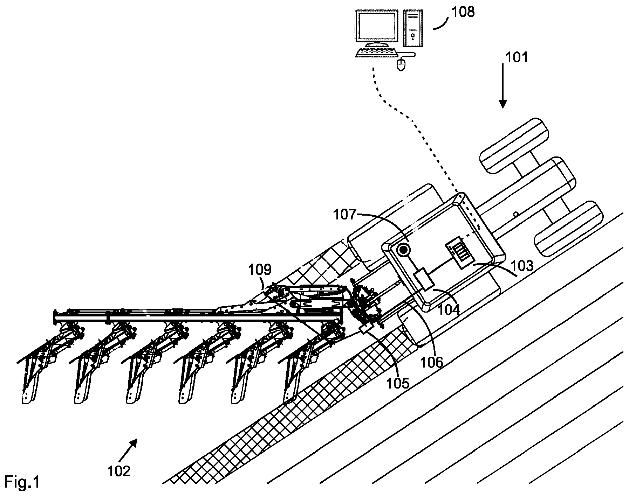

Ein landwirtschaftliches Maschinensystem mit einem erfindungsgemäßen Terminal 103 ist in Fig. 1 gezeigt. Das landwirtschaftliche Maschinensystem besteht hier aus einem Traktor 101 und einem an den Traktor angekoppelten Pflug 102. Der angekoppelte Pflug ist hier beispielhaft zu sehen. Es kann auch jede beliebige andere landwirtschaftliche Maschine zur Bearbeitung einer landwirtschaftlichen Fläche an den Traktor 101 angehängt werden. Auch kann das landwirtschaftliche Maschinensystem als selbstfahrendes landwirtschaftliches Maschinensystem, beispielsweise selbstfahrende Spritze oder Mähdrescher, ausgestaltet sein.

Der Traktor 101 verfügt über ein Terminal 103, welches mittels einer Anzeigevorrichtung Informationen dem Fahrer des Traktors 101 zur Anzeige bringen kann, insbesondere können Informationen der landwirtschaftlichen Maschine 102 und des Traktors, wie beispielsweise Position, Geschwindigkeit usw., angezeigt und Betriebsparameter, beispielsweise die Arbeitsbreite und/oder Arbeitstiefe, geändert werden. Das Terminal 103 verfügt hierfür über Bedienelemente in Form von Schaltern, Knöpfen und/oder insbesondere einen berührungsempfindlichen Bildschirm. Das Terminal ist insbesondere mit einem oder mehreren Jobrechnern 104, 105 verbunden, welche sich auf dem Traktor und/oder der angekoppelten landwirtschaftlichen Maschine befinden können. Die Datenverbindung zwischen dem Jobrechner 105 der landwirtschaftlichen Maschine 102 und dem Jobrechner 104 des Traktors erfolgt bevorzugt über eine genormte Datenverbindung 106, insbesondere eine sogenannte ISOBus-Schnittstelle. Alternativ kann auch das Terminal 103 direkt über das Bussystem, insbesondere den ISOBus mit dem Jobrechner 105 der landwirtschaftlichen Maschine 102 verbunden sein. Über dieses Bussystem werden Informationen der landwirtschaftlichen Maschine, beispielsweise eingestellte Ist-Werte oder Sensordaten an den Jobrechner 104 oder das Terminal 103 übertragen. In entgegengesetzter Richtung werden auch Steuerbefehle des Jobrechners 104 oder Terminals 103 an den Jobrechner 105 der landwirtschaftlichen Maschine 102 übertragen. Zur Ausführung der Steuerbefehle ist der Jobrechner 105 mit Aktuatoren und Sensoren über eine Datenverbindung verbunden, beispielsweise mit einem Aktor 109 zur Einstellung der Schnittbreite des Pfluges 102. Denkbar ist auch, dass der Jobrechner 105 der landwirtschaftlichen Maschine 102 im Rahmen einer sogenannten TIM-Anwendung (Tractor-Implement-Management) über das Bussystem 106 Steuerbefehle an den Traktor 101 übermittelt. Hierüber kann durch die angekoppelte Maschine 102 beispielsweise ein Steuerbefehl zur Reduktion der Geschwindigkeit oder zur Anhebung eines Dreipunktkrafthebers zur Reduktion der Arbeitstiefe erfolgen. Eine solche Maßnahme kann beispielsweise durch entsprechende Sensorsignale an der landwirtschaftlichen Maschine 102 getriggert sein.

Das Terminal 103 ist nun dazu ausgebildet den Bearbeitungsprozess mit der landtechnischen Maschine zu dokumentieren. Hierfür wird beispielsweise vordem Beginn der Feldarbeit die zu bearbeitende landwirtschaftliche Fläche aus einer Liste in einem Menü des Terminals 103, wie weiter unten noch genauer erläutert, ausgewählt oder die landwirtschaftliche Fläche in dem Terminal neu angelegt. Alternativ können ermittelte Daten auch zwischengespeichert und die Auswahl der bearbeiteten Fläche erst später erfolgen. Nach der Auswahl der zu bearbeitenden Fläche wählt der Benutzer vorzugsweise die zu protokollierenden Daten, die während des Bearbeitungsvorganges ermittelt und gespeichert werde, aus. Hierbei kann es sich um verschiedenste Sollwertvorgaben oder Sensordaten handeln, beispielsweise um die Position des Aktors 109. Weitere Sensoren zur Ermittlung des Zugkraftbedarfs oder der Arbeitstiefe können an der landtechnischen Maschine 102 angeordnet sein. Es wird während des Dokumentationsvorganges zumindest die Position des Maschinensystems durch Auslesen des Positionserfassungssystems 107 ermittelt. Dies kann durch das Terminal selbst oder wie in Fig. 1 dargestellt durch den Jobrechner 104 erfolgen. Auf diese Weise kann die während der Bearbeitung zurückgelegte Wegstrecke gespeichert werden. Auch kann vorgesehen sein, während der Bearbeitung geänderte Sollwerte, wie Arbeitstiefe oder Arbeitsbreite positionsgenau zu dokumentieren.

Die Daten können in einem Speicher des Terminals 103 und/oder eines Jobrechners 104, 105 gespeichert werden. Zusätzlich können die Daten zwecks Archivierung und Bearbeitung auf einem Datenverarbeitungssystem 108 exportiert werden, insbesondere kann dies in der Form einer genormten ISO-XML Datei erfolgen. Der Datentransfer zwischen dem Terminal 103 und dem Datenverarbeitungssystem 108 kann beispielsweise Drahtlos mittels Bluetooth oder WLAN oder auch mittels eines mobilen Datenträgers, insbesondere USB-Datenträgers, durchgeführt werden.

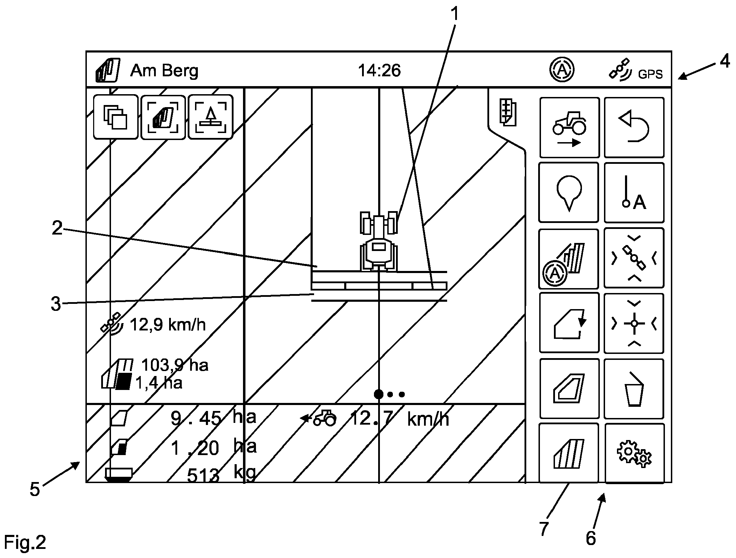

Die sogenannte GPS-Ansicht, die während der Arbeit auf dem Feld die aktuelle Position der landtechnischen Maschine 102 zeigt, ist in Fig. 2 dargestellt und wird in dieser oder ähnlicher Form vorzugsweise durch das Terminal 103 angezeigt Hier beispielhaft dargestellt ist ein Schlepper 1, an den eine Verteilmaschine 2 mit Teilbreiten 3 angekoppelt ist. Die bearbeitete Fläche wir durch das Terminal vorzugsweise mit einer entsprechenden farblichen Markierung oder Schraffur angezeigt.

Im oberen Bereich 4 des Bildschirms sind verschiedene Symbole dargestellt, die beispielsweise die GPS-Signalstärke oder den Namen der aktuell bearbeiteten Fläche, hier das Feld mit Namen "Am Berg", anzeigen. Es kann auch vorgesehen sein, mittels Online-Kartenmaterial zu erkennen, ob sich die Maschine aktuell auf einer landwirtschaftlichen Fläche oder öffentlichen Straße befindet und es kann entsprechend der Name der aktuell befahrenen Straße angezeigt werden. Die Straßenfahrt bzw. die für Straßenfahrten aufgewendete Zeit könnte ebenfalls dokumentiert werden. Im unteren Bereich 5 sind verschiedene Daten zur Information des Landwirtes dargestellt, beispielsweise die Größe der gerade bearbeiteten Fläche, die aktuelle Geschwindigkeit und die Masse des auszubringenden Guts in einem Behälter. Auf der rechten Seite im Bereich 6 sind verschiedene Symbole zum Wechseln in bzw. Aufrufen anderer Menüs dargestellt. Beispielsweise können grundlegende Einstellungen des Terminals oder der Maschine angepasst werden. Die Bedienung des Terminals erfolgt bevorzugt über direkte Berührung der entsprechenden Schaltflächen auf einem berührungsempfindlichen Bildschirm, jedoch können auch physikalische Knöpfe und Schalter vorgesehen sein. Von besonderer Bedeutung ist die Schaltfläche 7, welche die sogenannte Feldansicht öffnet.

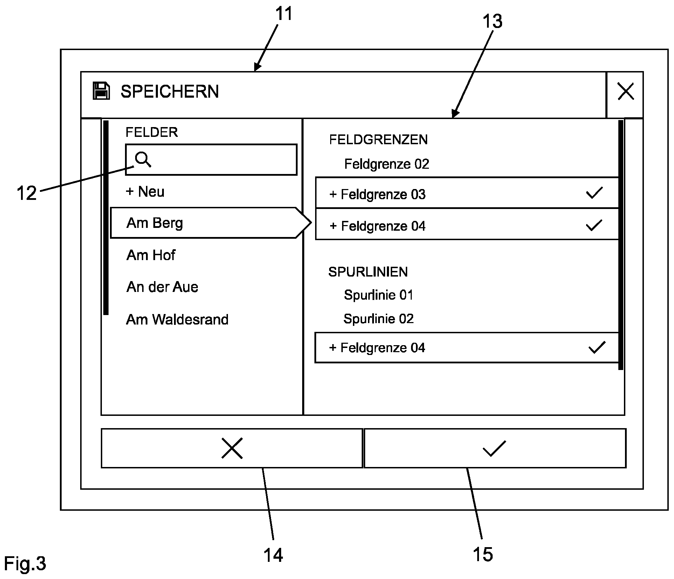

Durch Betätigen der Schaltfläche 7 wird ein Menü, wie in Fig. 3 dargestellt, geöffnet. Die Nutzung dieses Menüs kann auf zwei Arten erfolgen. Einerseits können relevante Bearbeitungsdaten während oder nach der Bearbeitung einer bestimmten Fläche zugeordnet und/oder zu dieser Fläche gespeichert werden. Andererseits kann vor dem Beginn der Bearbeitung ein Auftrag angelegt bzw. festgelegt werden, dass nachfolgend eine bestimmte Fläche bearbeitet werden soll.

Generell ist vorgesehen, dass die landtechnische Maschine mit Beginn der Feldarbeit alle nutzbaren Parameter, wie aktuelle Position, Sensordaten, wie beispielsweise Ausbringmenge und Geschwindigkeit, Einstellparameter, insbesondere Sollwerte, für beispielsweise eine Ausbringmenge oder Arbeitsbreite, und sonstige Daten, wie Temperatur in einem Speicher zwischenspeichert. Es ist möglich bereits vor Beginn der Feldarbeit die zu bearbeitende Fläche auszuwählen, so dass dann die Dokumentation von Beginn an dieser ausgewählten Fläche zugeordnet und zu dieser gespeichert wird. Alternativ besteht die Möglichkeit, dass durch ein Betätigen der Schaltfläche 7 während oder zum Ende der Feldarbeit die aufgezeichneten Daten einer bestimmten landwirtschaftlichen Fläche zugeordnet werden. Zu diesem Zweck wird das in Fig. 3 dargestellte Menü zum Speichern der aufgezeichneten Daten geöffnet. In der linken Spalte 11 zeigt dieses Menü alle zuvor angelegten landwirtschaftlichen Flächen. Bei einer großen Zahl von Flächen kann auch mittels des Lupensymbols 12 nach Namen gesucht werden. Durch Berühren des entsprechenden Namens der auszuwählenden Fläche, werden im rechten Teil die bereits vorhandenen und die zu speichernden Daten angezeigt. Dies können beispielsweise durch Umrunden der Fläche und Aufzeichnen der Position ermittelte Feldgrenzen oder durch Abfahren einer Strecke und Aufzeichnen der Position ermittelte Spurlinien bzw. sogenannte A-B-Linien sein. Es ist zudem denkbar, dass hier auch zusätzlich eine Auswahl von bestimmten Daten erfolgen kann, beispielsweise indem zusätzlich aus einer anzuzeigenden Liste ausgewählt und gespeichert wird, welcher Fahrer die Bearbeitung durchgeführt hat oder für welchen Kunden die Bearbeitung durchgeführt wurde. Bei einer Betätigung des Schaltelementes 14 wird die Auswahl verworfen oder alternativ mittels einer Betätigung des Elementes 15 die zwischengespeicherten bzw. ausgewählten Daten zu der ausgewählten Fläche gespeichert.

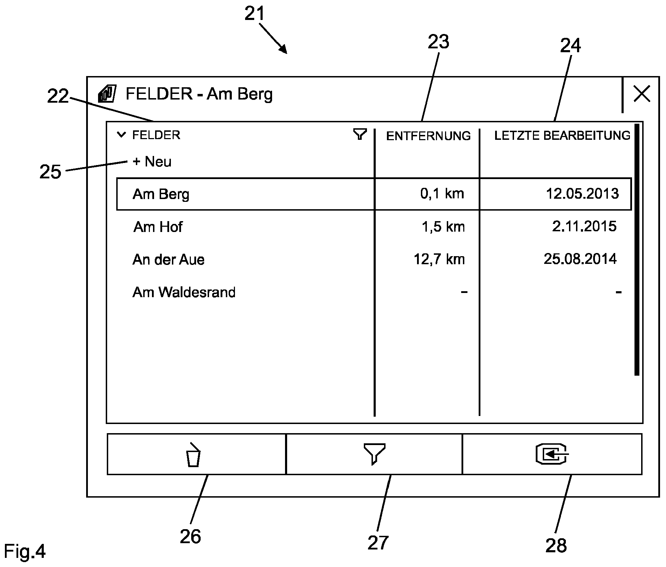

Nach dem Verwerfen oder Speichern der zwischengespeicherten Daten wird ein weiteres Menü angezeigt, wie in Fig. 4 dargestellt. Dieses stellt eine Übersicht der verschiedenen angelegten landwirtschaftlichen Flächen dar. Es zeigt eine dreispaltige Menüansicht 21. In der ersten Spalte 22 ist unter dem Titel "Name" die gewählte Bezeichnung für die Identifizierung der verschiedenen, angelegten landwirtschaftlichen Fläche, wie beispielsweise "Am Berg" oder "An der Aue" angegeben. Die mittlere Spalte 23 zeigt die Entfernung zwischen der aktuellen Position und der jeweiligen landwirtschaftlichen Fläche an. In diesem Fall ist die Entfernung zur landwirtschaftlichen Fläche mit dem Namen "Am Hof" beispielsweise 1,5 km. Die tabellarisch aufgeführten Flächen sind vorzugsweise wie dargestellt der Entfernung vom momentanen Standort nach geordnet. Die nächstgelegene Fläche ist mit "Am Berg" bezeichnet. Ebenfalls angeführt ist in der rechten Spalte 24 die letzte Bearbeitung der betreffenden Fläche. Das Aufnehmen einer weiteren Fläche in die dargestellte Liste erfolgt durch Auswahl des Bedienelementes "+ Neu" 25.

Die Symbole 26, 27, 28 ermöglichen die Auswahl weiterer Funktionen. Das Mülleimersymbol 26 aktiviert einen Löschenmodus in dem zu löschende Felder ausgewählt und durch Betätigung einer entsprechenden Schaltfläche zum Bestätigen gelöscht werden können. Das Trichtersymbol 27 dient dazu die aufgelisteten Elemente nach eingebbaren Kriterien zu filtern. Ein Sortieren der Tabelle kann in bekannter Weise durch Druck auf eine hinter der Spaltenüberschrift hinterlegte Schaltfläche erfolgen, so dass die Einträge beispielsweise in alphabetischer Reihenfolge, nach der Entfernung oder nach dem letzten Bearbeitungsdatum sortiert werden können. Letzteres kann vorteilhaft sein, wenn eine kürzlich abgebrochene Bearbeitung fortgesetzt werden soll. Das Symbol 28 ermöglicht das Importieren von Datensätzen von einem externen Datenträger, beispielsweise einem an das Terminal angeschlossenen USB-Speicher. Die Auswahl der einzelnen Symbole oder eine Fläche aus der Liste erfolgt vorzugsweise mittels einer Berührung des berührungsempfindlichen Bildschirms des Terminals 103.

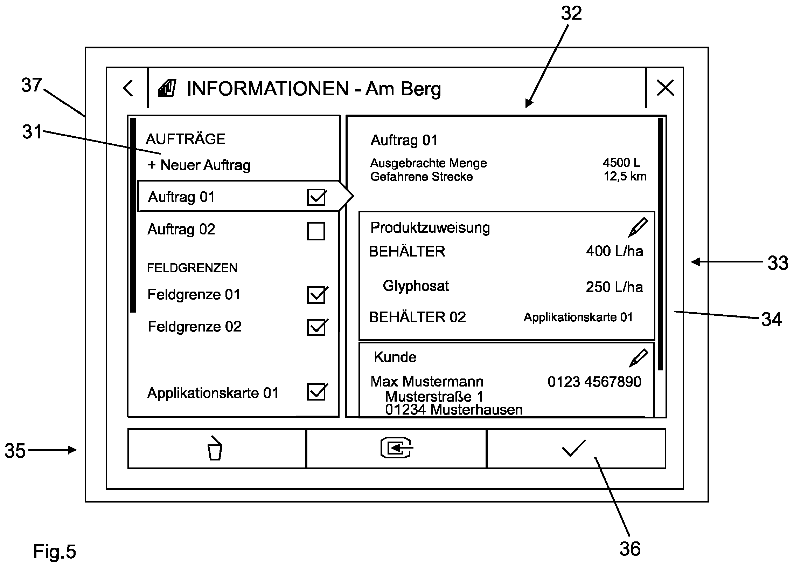

Soll bereits vor dem Beginn der Feldarbeit die Dokumentation der ermittelten Daten, wie Sensordaten, Einstellparameter und eingegebener Daten, wie Name des Fahrers der landtechnischen Maschine und ggf. des Kunden, festgelegt und eingerichtet werden, so kann dies durch eine Betätigung des Listeneintrages des Namens des Feldes, für den dies eingerichtet werden soll, erfolgen. Hierdurch wird ein Menü entsprechend der Fig. 5 angezeigt. Dieses zeigt die hinterlegten Datensätze der jeweils ausgewählten landwirtschaftlichen Fläche in einer Liste im Bereich 31. In dieser Liste werden beispielsweise Aufträge, Feldgrenzen und Applikationskarten aufgeführt. Für die anstehende Bearbeitung können nun die bereits hinterlegten und anzuzeigenden bzw. zu verwendenden Datensätze ausgewählt werden. Beispielsweise eine Feldgrenze der zu bearbeitenden Fläche. Es können auch mehrere Feldgrenzen ausgewählt werden, wenn beispielsweise zwei aneinander angrenzende Felder in einem Arbeitsgang bearbeitet werden sollen und/oder Grenzen Ausschlussflächen innerhalb einer zu bearbeitenden Fläche markieren. Durch Betätigung der jeweils hinter dem Eintrag sich befindlichen Schaltfläche kann ein Eintrag ausgewählt werden, so dass weitere Informationen auf der rechten Seite angezeigt werden. In dem vorliegenden Beispiel ist der Auftrag 01 ausgewählt und verschiedene sich hinter diesem Auftrag verbergende Informationen werden angezeigt, wie die gefahrene Strecke, die ausgebrachte Menge an Spritzbrühe. Es kann auch eine Schaltfläche vorgesehen sein, die die Parameter, wie beispielsweise Benutzer und/oder Aufwandsmenge, des zuletzt durchgeführten Arbeitsvorganges für die aktuelle Bearbeitung übernimmt. Zudem ist im Bereich 33 aufgeführt in welchem Behälter der verwendeten Feldspritze sich welches Spritzmittel, beispielsweise Glyphosat befindet und mit welcher Menge pro Hektar dieses jeweils ausgebracht werden soll bzw. an Position 34, ob für die Applikation eines bestimmten Behälterinhaltes eine hinterlegte Applikationskarte, hier "Applikationskarte 01", für "Behälter 02" verwendet werden soll.

Es ist vorgesehen jeweils nur einen Auftrag auswählen zu können. Es können jedoch beispielsweise mehrere Feldgrenzen verwendet werden, wie weiter oben bereits ausgeführt. Im Bereich 35 werden die zuvor beschriebenen Symbole zum Löschen einzelner Einträge, zum Importieren von Datensätzen, wie Feldgrenzen oder Applikationskarten und zum Bestätigen der eingetragenen und ausgewählten Informationen angezeigt. Durch Druck auf das Schaltfeld 36 zum Bestätigen werden die ausgewählten Datensätze, wie Auftrag, Feldgrenzen und Applikationskarten für die durchzuführende Feldarbeit verwendet und zu der im Titel aufgeführten landwirtschaftlichen Fläche gespeichert.

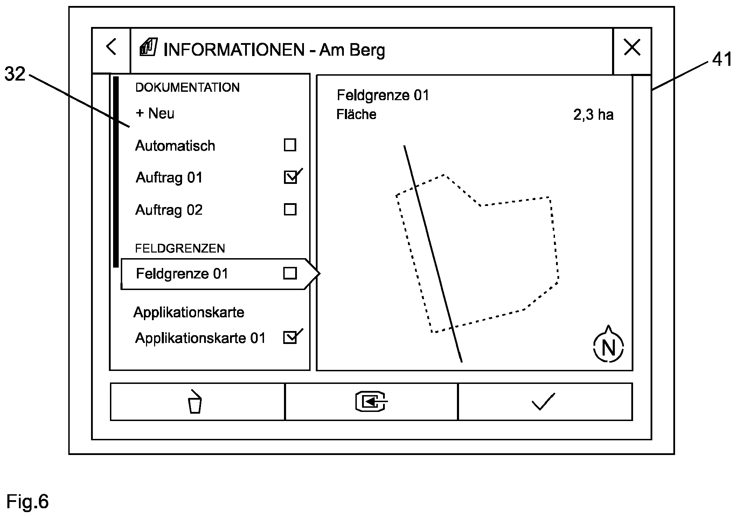

Es ist zudem vorgesehen durch Auswahl andere Einträge in der Liste 32 weitere Informationen anzuzeigen. Beispielsweise kann wie in Fig. 6 dargestellt durch die Auswahl der Feldgrenze 01 der Grundriss dieser Fläche (gestrichelt dargestellt) auf der rechten Seite 41 mit hinterlegter AB-Linie (durchgezogene Linie), der Gesamtfläche und der Nordrichtung angezeigt werden.

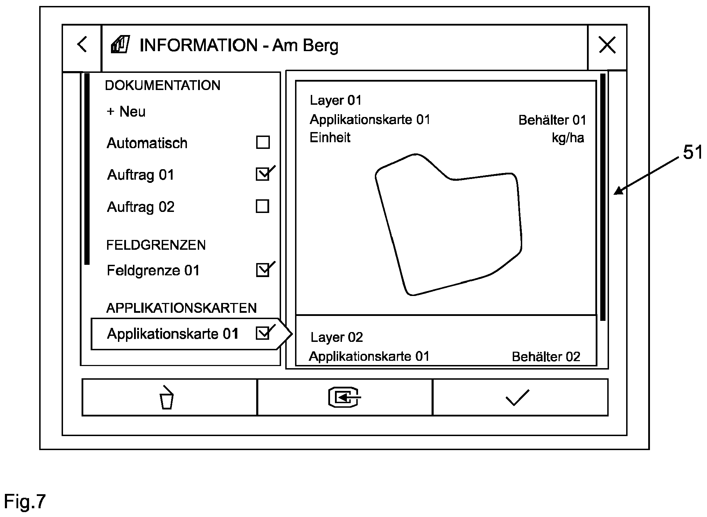

In gleicher Weise können durch Auswahl einer Applikationskarte, wie in Fig. 7 dargestellt, Informationen zu dieser Applikationskarte auf der rechten Seite 51 angezeigt werden. Die Applikationskarte kann hierbei jeweils aus mehreren sogenannten Layern bestehen, wenn beispielsweise eine Fläche gleichzeitig mit Mitteln aus mehreren Behältern behandelt wird, so dass die applizierte Menge jedes Mittels einzeln in einer Applikationskarte darstellbar ist.

## Patentansprüche

1. Datenverarbeitungssystem (103), insbesondere Terminal, zur Steuerung einer landtechnischen Maschine (102), wobei das Datenverarbeitungssystem mit einem Positionserfassungssystem (107) verbunden und ausgebildet ist, die aktuelle Position einer landtechnischen Maschine (102) in einer Kartenansicht auf einer landwirtschaftlichen Fläche anzuzeigen, wobei das Datenverarbeitungssystem (103) Daten, wie zumindest Positionsdaten sowie vorzugsweise Einstellparameter der landtechnischen Maschine und/oder Applikationskarten und/oder Benutzerdaten in einem Speicher hinterlegt, **dadurch gekennzeichnet, dass**,
das Datenverarbeitungssystem feldarbeitsbezogene Daten, wie zumindest während der Bearbeitung der landwirtschaftlichen Fläche ermittelte Positionsdaten sowie vorzugsweise Einstellparameter der landtechnischen Maschine und/oder Applikationskarten und/oder Benutzerdaten in einem Speicher derart ablegt, dass die Daten mit der jeweils bearbeiteten landwirtschaftlichen Fläche verknüpft sind, wobei die Auswahl der landwirtschaftlichen Fläche durch eine Dateneingabe in das Datenverarbeitungssystem (103) erfolgt und wobei die abgelegten Daten anhand der landwirtschaftlichen Fläche aufrufbar sind.

2. Datenverarbeitungssystem nach Anspruch 1, **dadurch gekennzeichnet, dass** die Dateneingabe durch eine Bedieneingabe des Benutzers in das Datenverarbeitungssystem (103) und/oder eine Übermittlung von Positionsdaten des Positionserfassungssystems (107) an das Datenverarbeitungssystem (103) erfolgt.

3. Datenverarbeitungssystem nach Anspruch 1 oder 2, **dadurch gekennzeichnet, dass** bei einem Abbruch eines Bearbeitungsvorganges auf einer landwirtschaftlichen Fläche dieses durch das Datenverarbeitungssystem (103) dokumentiert wird und bei einem nachfolgenden Anfahren derselben Fläche die Dokumentation des zuvor abgebrochenen Bearbeitungsvorgangs durch das Datenverarbeitungssystem (103) automatisiert fortgesetzt werden kann.

4. Datenverarbeitungssystem nach zumindest einem der Ansprüche 1 bis 3, **dadurch gekennzeichnet, dass** das Datenverarbeitungssystem (103) die angekoppelte landtechnische Maschine (102) mittels einer Datenverbindung erkennt und entsprechend der angekoppelten Maschine (102) Einstellparameter und/oder Sensordaten abfragt, um diese anzuzeigen und zu dokumentieren.

5. Verfahren zur Speicherung von Daten eines Arbeitsprozesses einer landtechnischen Maschine (102) auf einer landwirtschaftlichen Fläche in einem Speicher eines Terminals oder sonstigen Datenverarbeitungssystems (103), wobei die Daten insbesondere Einstellparameter der landtechnischen Maschine (102) und/oder Kartendaten und/oder Applikationskarten und/oder Benutzerdaten umfassen, wobei zumindest ein Sensor (107) zur Erfassung von Positionsdaten und vorzugsweise weitere Sensoren zur Ermittlung von Arbeitsparametern an der landtechnischen Maschine angeordnet sind, umfassend die Schritte:
- Eingabe der zu bearbeitenden Fläche in das Terminal oder Datenverarbeitungssystem (103),
- Eingabe der zu speichernden Daten bezüglich der durchzuführenden Arbeit, wie insbesondere Einstellparameter der landtechnischen Maschine (102) und/oder Kartendaten und/oder Applikationskarten und/oder Benutzerdaten in das Terminal oder Datenverarbeitungssystem,
- Wiederholtes Auslesen von Sensordaten von Sensoren (107) der landtechnischen Maschine (102) während der Durchführung der Arbeit auf der zu bearbeitenden Fläche,
- Erstellung und Speicherung zumindest eines Datenpaketes durch das Terminal oder Datenverarbeitungssystem (103), wobei sich das Datenpaket auszeichnet durch eine Verknüpfung von Daten betreffend eine Identifizierung der zu bearbeitenden Fläche, die ausgelesenen Sensordaten und vorzugsweise die durchzuführende Arbeit.

6. Verfahren nach Anspruch 5, **dadurch gekennzeichnet, dass** die Eingabe der zu bearbeitenden Fläche durch ein Auslesen des Positionssensors (107) durch das Terminal oder Datenverarbeitungssystem (103) oder durch eine Bedieneingabe des Benutzers erfolgt.

7. Verfahren nach Anspruch 5 oder 6 **dadurch gekennzeichnet, dass** die Eingabe der durchzuführenden Arbeit durch das Auslesen von Daten, insbesondere Sensordaten und/oder Einstellparametern, der landtechnischen Maschine (102) erfolgt.

8. Verfahren nach zumindest einem der Ansprüche 5-7, **dadurch gekennzeichnet, dass** während des Arbeitsprozesses wiederholt ermittelte Sensordaten zwischengespeichert werden und durch Eingabe der zu bearbeitenden Fläche während oder nach Abschluss des Arbeitsprozesses die zwischengespeicherten Daten mit der zu bearbeitenden Fläche verknüpft und gespeichert werden.
